# FASCICULE DE BREVET EUROPEEN

(11) **EP 2 017 518 B1**
(45) Date de publication et mention de la délivrance du brevet: **15.09.2010**
(21) Numéro de dépôt: 08160379.7
(22) Date de dépôt: 15.07.2008
(51) Int. Cl.: F16L 33/04

(54) **Dispositif de serrage avec collier de serrage et pièce de positionnement**
Klemmvorrichtung mit Schlauchklemme und Positionierteil
Tightening device with tightening collar and positioning element

(30) Priorité: 16.07.2007 FR 0756510
(43) Date de publication de la demande: 21.01.2009
(73) Titulaire: Etablissements Caillau, 92130 Issy-les-Moulineaux (FR)
(72) Inventeur: Rigollet, Nicolas, 41200 Romorantin (FR); Prevot, Fabrice, 41130 Selles sur Cher (FR); Mesnard, Eric, 41250 Tours en Sologne (FR)
(74) Mandataire: Intes, Didier Gérard André

(56) Documents cités:
- EP-A- 0 571 294
- FR-A- 2 680 405
- FR-A- 2 756 356
- US-A- 3 407 448

## Description

La présente invention concerne un dispositif de serrage comprenant un collier de serrage ayant une ceinture qui a deux faces sensiblement cylindriques et qui est apte à être serrée autour d'un objet à serrer, et au moins une pièce de positionnement comprenant une plaquette de solidarisation qui est disposée en regard d'une première face de la ceinture en étant retenue par rapport à ladite ceinture et une portion de positionnement qui est apte à coopérer avec l'objet à serrer pour positionner le dispositif par rapport audit objet.

Un dispositif de ce type est par exemple connu du brevet US 3 407 448.

Il est intéressant de positionner le collier de serrage par rapport à l'objet à serrer pour s'assurer que le serrage est réalisé dans la région souhaitée. Lorsque le serrage sert à réaliser non seulement la fixation de l'objet à serrer sur un autre objet, mais également à assurer une étanchéité de cette fixation, la nécessité d'avoir un positionnement correct est particulièrement aigue.

Par ailleurs, il est intéressant de positionner du collier par rapport à l'objet à serrer avant de relier cet objet à un autre objet auquel il doit être fixé.

Ceci permet d'assurer un pré-positionnement du collier de serrage et, en particulier, de pouvoir livrer l'objet à serrer pré-équipé du collier de serrage.

La présente invention vise à proposer un dispositif du type précité, dans lequel la liaison entre la pièce de positionnement et la ceinture du collier soit sûre et peu coûteuse, tout en étant réalisée de manière à ne pas nuire au serrage.

Ce but est atteint grâce au fait que, à l'état initial non serré du collier, la plaquette de solidarisation est arc-boutée contre la première face de la ceinture, en ce que ladite plaquette est apte à être déformée lors du serrage du collier sur l'objet pour présenter une courbure adaptée à celle de la ceinture et en ce que, au début du serrage, la déformation de la plaquette provoque une suppression de l'effet d'arc-boutement autorisant un déplacement relatif de la ceinture et de la plaquette.

Grâce à ces dispositions, la plaquette de solidarisation est maintenue par un simple effet d'arc-boutement, sans nécessité de fixations complexes. Cet arc-boutement permet d'assurer le positionnement de la plaquette par rapport à la ceinture du collier, sans que la plaquette ne soit flottante par rapport à cette ceinture, de manière à ce qu'elle soit placée à l'endroit souhaité par rapport à la ceinture. La déformation de la plaquette qui se produit au début du serrage provoque une suppression de l'effet d'arc-boutement, ce qui permet le déplacement relatif entre la ceinture et la plaquette est autorisé. Ainsi, la présence de la plaquette ne nuit aucunement à la nécessaire réduction du diamètre du collier lors du serrage, ni à la qualité du serrage.

De préférence, à l'état initial non serré du collier, une face de la plaquette tournée vers la première face de la ceinture présente au moins deux zones d'arc-boutement en contact avec ladite première face de la ceinture et une zone de séparation, qui est disposée entre les deux zones d'arc-boutement et qui est à distance de ladite première face de la ceinture.

Cette disposition permet de réaliser l'arc-boutement de manière simple et efficace.

Avantageusement, la première face du collier est la face interne de ce dernier et, à l'état non serré du collier, la plaquette de positionnement présente au moins une portion de corde qui est disposée sensiblement selon une corde d'un arc défini par la portion de la face interne de la ceinture située en regard de ladite portion de corde.

La plaquette a ainsi une conformation simple, et son positionnement par rapport à la ceinture du collier est aisé. On notera que ceci n'empêche pas que la plaquette puisse présenter une légère courbure, ainsi qu'il sera décrit dans la suite.

Avantageusement, la portion de positionnement de la pièce de positionnement est en saillie axiale par rapport à un bord de la ceinture.

Ceci permet de réaliser la coopération entre la pièce de positionnement et l'objet à serrer dans une région de cet objet qui est distante de celle, située sous la ceinture, qui est directement affectée par l'effort de serrage.

Avantageusement, la portion de positionnement présente au moins une surface de butée axiale qui est orientée sensiblement perpendiculairement par rapport à l'axe de la ceinture.

Cette surface de butée axiale coopère avec une surface correspondante ménagée sur l'objet à serrer, en particulier l'extrémité libre de cet objet ou bien un épaulement à la surface de ce dernier, pour que le positionnement permette de caler axialement la ceinture du collier par rapport à l'objet à serrer.

Il est également avantageux que la portion de positionnement présente au moins un crochet.

Ce crochet peut être accroché sur l'objet à serrer avant le serrage, pour éviter tout déplacement relatif entre le dispositif de serrage et cet objet.

Selon un mode de réalisation particulièrement avantageux, la portion de positionnement comprend une portion de feuille solidaire de la plaquette de solidarisation, cette portion de feuille étant sensiblement parallèle à l'axe de la ceinture et ayant un bord éloigné de ladite plaquette qui présente au moins un ergot de retenue replié du côté de la face interne de ladite portion de feuille.

La portion de positionnement est ainsi réalisée de manière particulièrement simple et peu coûteuse. En fait, l'ensemble de la pièce de positionnement peut être réalisé à partir d'un feuillard, dont une partie est utilisée pour former la plaquette de solidarisation tandis que l'autre partie est utilisée pour former la portion de positionnement.

Avantageusement, le collier comporte un mécanisme de serrage comprenant une vis tangente disposée dans un palier monté à une première extrémité de la ceinture, la deuxième extrémité de la ceinture étant insérée dans le palier, entre la vis et la face externe de ladite première extrémité et présentant des reliefs de serrage avec lesquels les filets de la vis sont aptes à coopérer lors de la rotation de ladite vis, pour déplacer la deuxième extrémité de la ceinture par rapport à la première.

L'invention trouve en effet une application particulièrement intéressante lorsque le collier est du type "collier à vis tangente".

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels:
- la figure 1 montre en perspective un dispositif selon l'invention, selon un premier mode de réalisation ;
- les figures 2 et 3 sont deux vues en perspective montrant la pièce de positionnement, respectivement du côté de sa face interne et du côté de sa face externe ;
- la figure 4 montre le dispositif de l'invention disposé sur un objet à serrer constitué par un tuyau, avant le serrage ;
- la figure 5 est une vue en coupe selon la ligne V-V de la figure 4 ;
- la figure 6 montre, en perspective, un outil permettant le montage du dispositif sur un tel tuyau ;
- la figure 7 illustre la coopération d'un tel outil avec le dispositif de l'invention, avant son montage sur un tuyau ;
- la figure 8 est une vue analogue à la figure 1, pour un deuxième mode de réalisation ;
- la figure 9 est une vue en perspective, de la pièce de positionnement utilisée dans ce deuxième mode de réalisation vue du côté de sa face interne ; et
- la figure 10 est une vue partielle en perspective montrant, à partir d'une coupe radiale, la coopération de cette pièce de positionnement avec un tuyau.

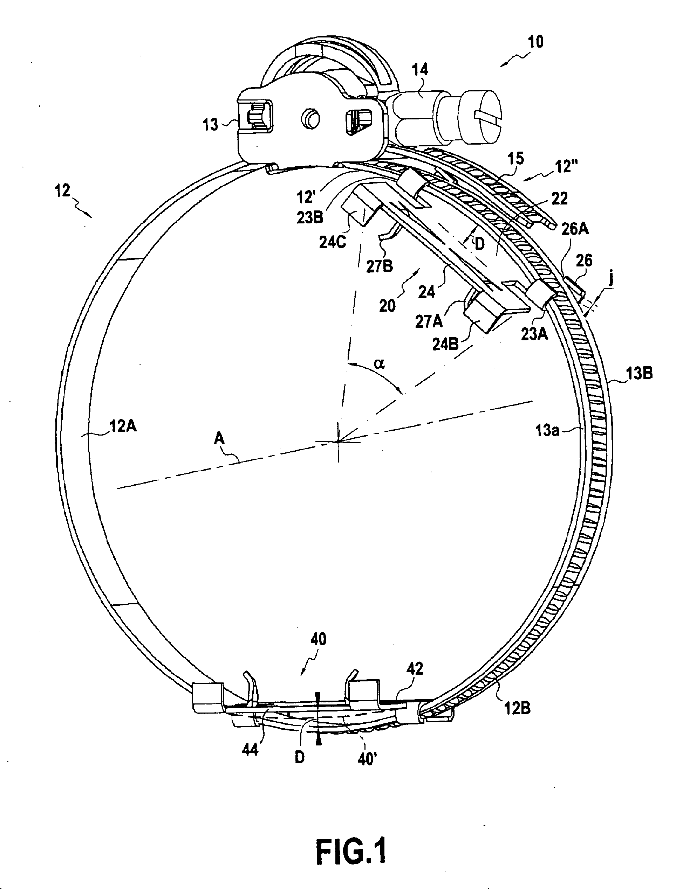

On décrit d'abord la figure 1, qui montre un dispositif de serrage selon l'invention, comprenant un collier de serrage 10 et deux pièces de positionnement, respectivement 20 et 40. Le collier 10 comprend une ceinture 12 ayant deux faces sensiblement cylindriques, respectivement une face interne 12A, tournée vers l'axe A du collier, et une face externe 12B, opposée à la face 12A. En l'espèce, le collier est du type à vis tangente. Il comporte en effet un mécanisme de serrage qui comprend un palier 13 monté à une première extrémité 12' de' la ceinture. Ce palier supporte la rotation d'une vis 14 orientée tangentiellement par rapport à la surface cylindrique de la ceinture 12 d'axe A. La face externe 12B de la ceinture présente des reliefs de serrage 15, disposés au moins dans la région de la deuxième extrémité 12" de la ceinture qui est insérée dans le palier, entre la vis et la face externe de la première extrémité 12'. Ces reliefs de serrage peuvent coopérer avec les filets de la vis lors de la rotation de cette dernière pour déplacer la deuxième extrémité de la ceinture par rapport à la première. Ce type de collier est connu, par exemple par les brevets EP 0 571 294 et FR 2 756 356.

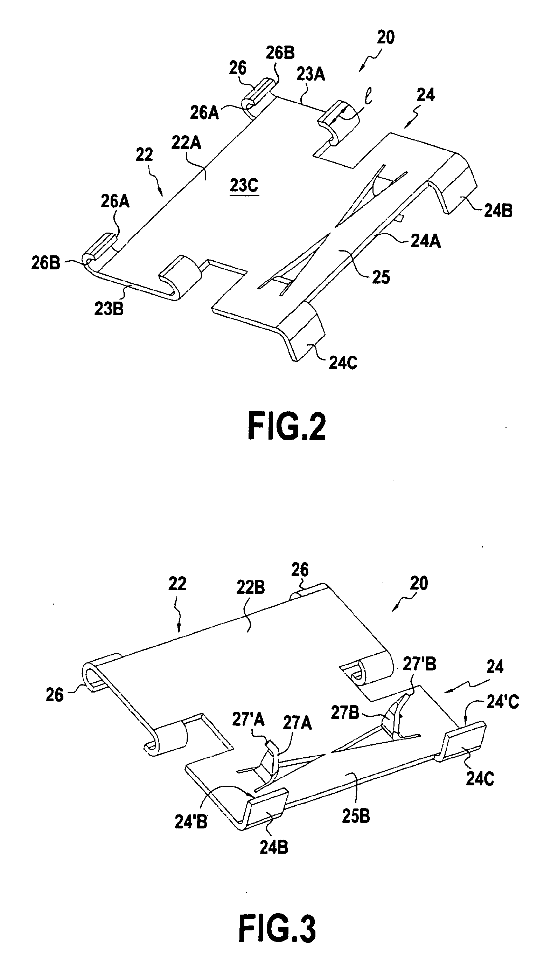

Chacune des deux pièces de positionnement 20 et 40 comprend une plaquette de solidarisation, respectivement 22 et 42, qui est disposée en regard de la face interne 12A du collier en étant retenue par rapport à la ceinture, et une portion de positionnement, respectivement 24 et 44. En référence aux figures 2 et 3, on décrit la pièce de positionnement 20. On comprend que cette pièce est formée en une seule pièce par découpe et pliage à partir d'un feuillard. La portion de positionnement 24 comprend une portion de feuille 25 qui est solidaire de la plaquette de solidarisation 22. En l'espèce, la plaquette 22 et la portion de feuille 25 sont formées dans la continuité l'une de l'autre et forment un élément de plaque plat.

En considérant également la figure 1, on voit que la retenue de la plaquette de positionnement 22 par rapport à la ceinture 12 du collier est assurée par des organes de retenue qui comprennent des becs de retenue 26 recourbés sur les bords 13A et 13B de la ceinture. Il s'agit des bords transversaux de la ceinture, orientés perpendiculairement à l'axe A. Ces becs sont formés sur les bords longitudinaux de la plaquette, lesquels bords sont orientés perpendiculairement à l'axe A. On voit que les becs sont recourbées sur les bords 13A et 13B sans être serrées sur ces bords, comme indiqué par le jeu j montré sur la figure 1. Les becs 26 sont recourbés du côté de la face externe 22A de la plaquette 22, opposée à sa face interne 22B (voir aussi figures 2 et 3).

La figure 1 montre le dispositif de serrage à l'état initial non serré du collier 10, et on voit que la plaquette de solidarisation 22 ou 42 est arc-boutée contre la face 12A de la ceinture. Plus précisément, la face 22A de la plaquette qui est tournée vers la face 12A de la ceinture et qui est donc orientée vers l'extérieur par rapport à l'axe A, présente deux zones d'arc-boutement, respectivement formées aux extrémités 23A et 23B de la plaquette qui sont en contact avec la première face 12A de la ceinture, tandis que le reste de la face externe de la plaquette forme une zone de séparation 23C, qui est disposée entre les deux zones d'arc-boutement et qui est à distance de la première face de la ceinture, comme indiqué par la double flèche D.

Pour favoriser l'effet d'arc-boutement, il est avantageux que les zones d'arc-boutement soient distantes l'une de l'autre, par exemple en étant formées aux extrémités longitudinales 23A et 23B de la plaquette 22, qui sont orientées parallèlement à l'axe A. On pourrait également prévoir que le contact entre la face 22A de la plaquette et la face 12A de la ceinture s'effectue dans deux zones décalées par rapport à ces extrémités 23A et 23B.

Dans les zones de contact, la face 22A de la plaquette forme un angle avec la face 12A de la ceinture. La conformation des becs de retenue est telle que le contact entre ces becs et la face externe 12B de la ceinture s'effectue sur les bords 26A de ces becs qui sont opposés aux extrémités 23A et 23B et sont donc situés à quelque distance des zones d'arc-boutement. En l'espèce, les becs de retenue sont formés au voisinage immédiat des extrémités 23A et 23B puisque leurs bords 26B opposés aux bords 26A précités sont dans la continuité desdites extrémités 23A et 23B. La longueur *l* des becs de retenue, mesurée selon la longueur de la plaquette, perpendiculairement à l'axe A, est telle que la distance entre les bords 26A des becs de retenue et les zones d'arc-boutement formées par les extrémités 23A et 23B de la plaquette soit suffisante. Il se produit ainsi un effet de levier qui, à chaque extrémité, favorise l'arc-boutement.

Le feuillard, de préférence métallique, dans lequel est formée la plaquette de solidarisation 22 présente une épaisseur suffisamment faible, qui est en l'espèce sensiblement égale à celle du feuillard dans lequel est formée la ceinture 12, pour que cette plaquette 22 se déforme lors du serrage du collier sur l'objet à serrer, de manière à adopter, lors du serrage, une courbure voisine de celle de la ceinture. La plaquette de solidarisation 22 est une pièce allongée, sa longueur étant mesurée perpendiculairement à l'axe A, qui couvre un secteur angulaire α de la face 12A de la ceinture, l'angle α étant avantageusement compris entre 5° et 20°.

Dans l'exemple de réalisation qui est représenté, la face de la ceinture 12 contre laquelle est disposée la plaquette 22 est sa face interne 12A. Dans ce cas, comme on le voit sur le dessin, la plaquette de solidarisation 22 forme une portion de corde, disposée sensiblement selon une corde d'un arc défini par la portion de la face 12A de la ceinture située en regard de cette portion de corde. En l'espèce, la plaquette est rectiligne, de sorte que cette portion de corde se présente réellement comme la corde d'un arc au sens géométrique du terme. Toutefois, au sens de la présente invention, il est suffisant que la plaquette de solidarisation présente au moins une portion de corde, disposée sensiblement selon une telle corde géométrique. En effet, il est avantageux que la plaquette de positionnement présente une concavité comme indiquée en traits interrompus pour la plaquette 40, sous la référence 40'. On voit que cette concavité est tournée dans le même sens que la concavité de la portion de la face interne de la ceinture en regard de laquelle s'étend la plaquette. La courbure générale de la portion de corde est inférieure à la courbure de la portion de la face interne de la ceinture. En particulier, si la plaquette a une forme cylindrique, son rayon de courbure à l'état libre est supérieur au rayon de courbure de la ceinture, par exemple de l'ordre de 2 à 10 fois le rayon en question.

Il convient de relever que la concavité de la plaquette peut ne pas être continue, celle-ci pouvant par exemple présenter la forme d'un secteur angulaire, avec un angle obtus à son sommet, de préférence supérieur à 160°, voire supérieur à 170°.

Il convient de relever que l'on pourrait disposer de la plaquette du côté extérieur de la ceinture du collier. Dans ce cas, cette plaquette pourrait également avoir une forme concave, dont la concavité serait orientée dans le même sens que celle de cette ceinture, mais son rayon de courbure serait alors au contraire nettement inférieur à celui de la ceinture. Les becs de retenue seraient alors recourbés vers l'intérieur pour que leurs extrémités se placent sous la face intérieure de la ceinture. La dimension *l* de ces becs dans la direction longitudinale de la plaquette de solidarisation serait alors de préférence augmentée par rapport à celle que montrent les figures, pour permettre la suppression de l'arc-boutement lors du serrage, sous l'effet de la déformation de ces becs due aux contraintes de réaction de l'objet à serrer.

En l'espèce, comme indiqué précédemment, la plaquette est toutefois située contre la face interne de la ceinture, et les becs de retenue sont recourbés vers l'extérieur, c'est-à-dire du côté opposé à l'axe A.

La portion de positionnement 24 de la pièce de positionnement 20 est en saillie axiale par rapport aux bords 13A de la ceinture 12.

La portion de feuille 25 est sensiblement parallèle à l'axe A de la ceinture 12. Sur son bord 24A éloigné de la paquette de solidarisation 22 et également éloigné du bord 13A de la ceinture, la portion de feuille 25 présente deux ergots de retenue 24B et 24C qui sont repliés du côté de la face interne 25B de la portion de feuille. Ces ergots sont repliés sensiblement à angle droit par rapport à la portion de feuille, de sorte que leurs faces internes, respectivement 24'B et 24'C, sont sensiblement perpendiculaires à l'axe A.

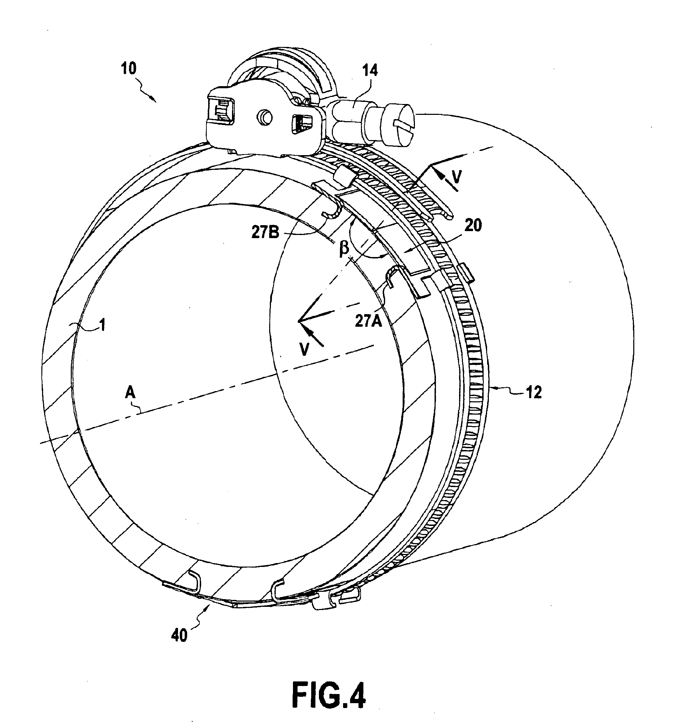

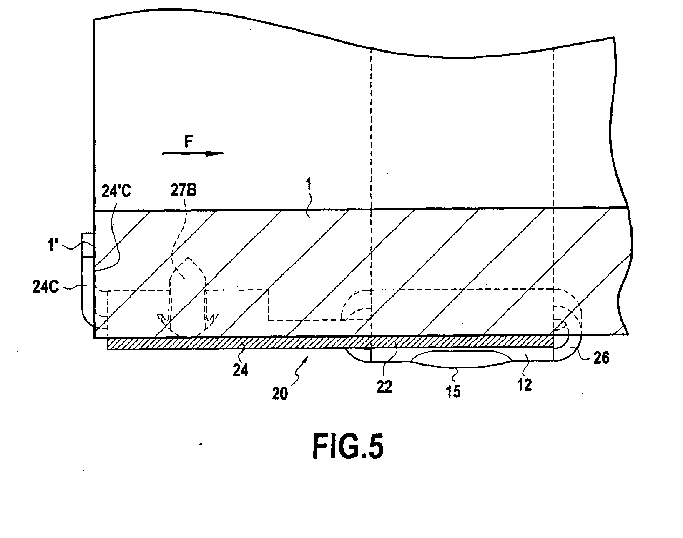

Ces faces internes forment des surfaces de butée axiale. Comme on le comprend en considérant les figures 4 et 5, qui montrent le dispositif de serrage de l'invention mis en place autour d'un tuyau 1, ces surfaces de butée axiale sont en butée axiale contre l'épaulement formé par l'extrémité libre 1' du tuyau 1. Elles permettent d'éviter un déplacement du dispositif de serrage par rapport au tuyau dans le sens F indiqué dans la figure 5.

Par ailleurs, la portion de positionnement 24 présente deux crochets, respectivement 27A et 27B qui forment des pointes d'accrochage. En l'espèce, ces pointes d'accrochage 27A et 27B sont en saillie sous la face interne 25B de la portion de feuille 25. On voit qu'elles sont prélevées dans cette portion de feuille. Plus précisément, les pointes d'accrochage sont découpées dans la portion de feuille et pliées par rapport à cette dernière, du côté de sa face interne.

On voit sur les figures 4 et 5 que les pointes d'accrochage 27A et 27B sont harponnées dans le tuyau 1. En l'espèce, ce dernier est réalisé dans un matériau de type élastomère, dans lequel les pointes d'accrochage, plus dures que ce matériau peuvent pénétrer et s'accrocher. Les extrémités libres pointues 27'A et 27'B des pointes d'accrochage favorisent leur pénétration dans la matière du tuyau. On voit qu'elles sont recourbées en se rapprochant de la face interne 25B de la portion de feuille. Ceci permet aux pointes d'accrochage harponnées dans la matière du tuyau, d'adopter lors du serrage une forme qui permet d'éviter qu'elles ne transpercent le tuyau. En effet, la courbure des extrémités libres 27'A et 27'B, qui est suffisamment faible pour ne pas nuire au harponnage, permet de pré-orienter les déformations des pointes d'accrochage lors du serrage pour éviter que ces pointes ne se déplacent purement radialement dans la matière harponnée.

On relève sur la figure 4, qui illustre une variante du mode de réalisation de la figure 1, que la plaquette de positionnement et la portion de feuille présentent sensiblement la forme d'un toit à deux pentes, avec un angle β au sommet obtus, peu inférieur à 180°. Ce sommet est formé par un pli médian parallèle à l'axe A.

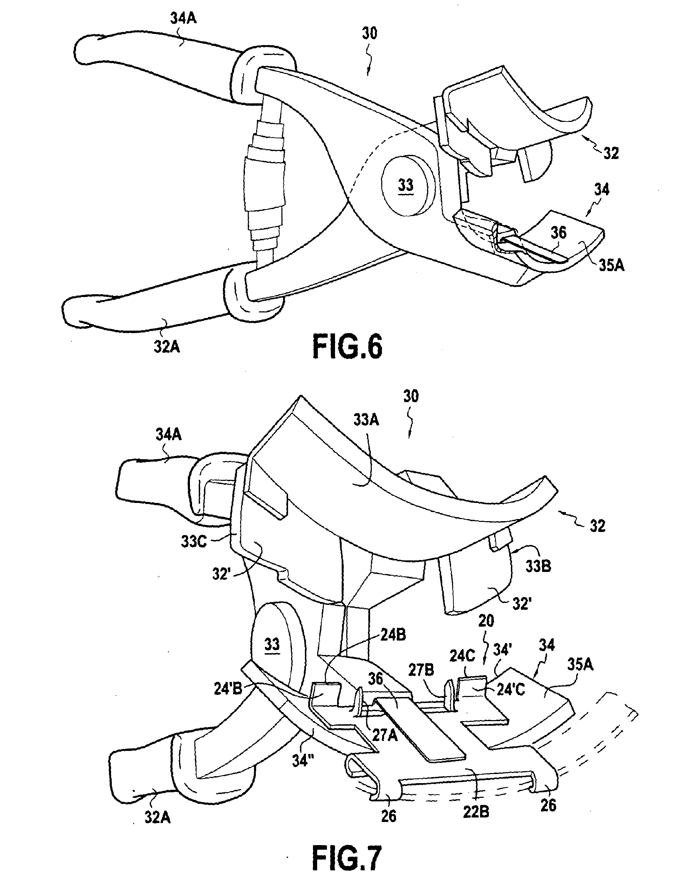

Les figures 6 et 7 montrent, selon un exemple de réalisation, un outil permettant la mise en place du dispositif de serrage sur le tuyau 1. Cette pince 30 présente de manière classique, deux mâchoires 32 et 34, qui peuvent être rapprochées et éloignées l'une de l'autre par l'actionnement à pivotement de bras 32A et 34A autour d'un axe de pivotement 33. La mâchoire 34 permet de recevoir le dispositif selon l'invention avant le serrage. A cet effet, elle présente une surface intérieure 35A qui présente une concavité définissant un rayon de courbure voisin de celui de la périphérie externe du tuyau. Avant le serrage, la pièce de positionnement 20 est disposée contre cette face intérieure 35A, en étant retenue contre elle par une lamelle élastique 36. Cette pièce de positionnement étant alors montée sur la ceinture du collier (représentée en traits interrompus), l'ensemble du dispositif de serrage est alors maintenu par la mâchoire 34.

Dans cette situation, les ergots de retenue 24B et 24C sont disposés vers le fond 34' de la mâchoire, ce fond étant défini par opposition à son extrémité libre 34" éloignée de l'axe de pivotement 33.

S'agissant de l'autre mâchoire 32, sa face interne 33A, tournée vers la face interne 35A de la mâchoire 34, est convexe en ayant une courbure adaptée à celle de la face interne 35A. Le fond de cette mâchoire 32 présente une surface de butée 32', formée en l'espèce sur les faces externes, éloignées de l'axe 33, de deux ailettes transversales 33B et 33C. Dans cette situation, l'extrémité du tuyau A peut être disposée contre la face interne de la mâchoire 34 et, plus précisément, sur la lamelle 36, contre la face interne de la pièce de positionnement. Le tuyau est calé axialement par la surface de butée 32' précitée lorsque les mâchoires sont rapprochées l'une de l'autre. En réalité, l'extrémité libre 1' du tuyau 1 vient en butée contre les faces internes 24'B et 24'C des ergots de retenue 24B et 24C. On comprend que, lors du serrage de la pince rapprochant les deux mâchoires l'une de l'autre, les pointes d'accrochage 27A et 27B pénètrent dans la matière du tuyau. Après ce serrage, la lamelle 36, initialement coincée entre la matière du tuyau et la face interne de la pièce de positionnement, peut être dégagée par une traction axiale exercée sur la pince.

A l'issue de cette opération, on obtient l'ensemble constitué par le tuyau et le dispositif de serrage de l'invention, tel que représenté sur la figure 4. Cet ensemble peut être manipulé comme un tout, et être raccordé à un embout sur lequel le tuyau est emmanché, avant le serrage du collier, lequel peut s'effectuer simplement à l'aide d'un outil de vissage de la vis 14 du collier, sans qu'il soit nécessaire de maintenir en même temps ce dernier.

La pièce de positionnement 40 n'a pas été décrite en détail car elle est analogue en tout point à la pièce de positionnement 20. Dans l'exemple représenté, les becs de retenue de ces deux pièces peuvent coulisser sur la ceinture 12 du collier. On pourrait toutefois prévoir que, pour au moins l'une des deux pièces de positionnement, les becs de retenue situés à l'une des extrémités soient sertis ou pincés sur les bords de la ceinture pour être fixes par rapport à cette dernière.

Dans ce cas, dans la mesure où les becs de positionnement de l'autre extrémité ne sont au contraire pas serrés sur la ceinture, le déplacement relatif de la ceinture et de la pièce de positionnement lors de la réduction du diamètre de la ceinture occasionné par le serrage est permis. Le fait de fixer l'une des extrémités de la pièce positionnement à la ceinture permet d'éviter tout déplacement involontaire de la pièce de positionnement par rapport à cette ceinture, en particulier lorsque, au début du serrage, l'effet d'arc-boutement est supprimé en raison de la déformation de la plaquette. Le fait d'éviter un tel déplacement permet en particulier de conserver l'orientation souhaitée du collier par rapport à l'objet à serrer.

De manière générale, on peut prévoir que l'une des extrémités de la plaquette soit fixe par rapport à la ceinture (par tous moyens appropriés, tels qu'une soudure ou un clinchage), tandis que l'autre extrémité serait libre de se déplacer tout en étant retenue pour permettre l'effet d'arc-boutement initial.

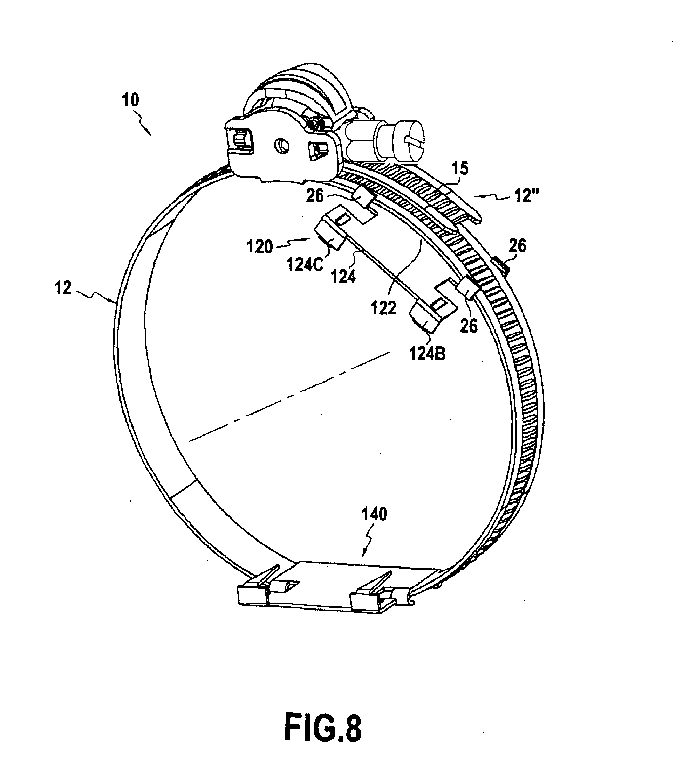

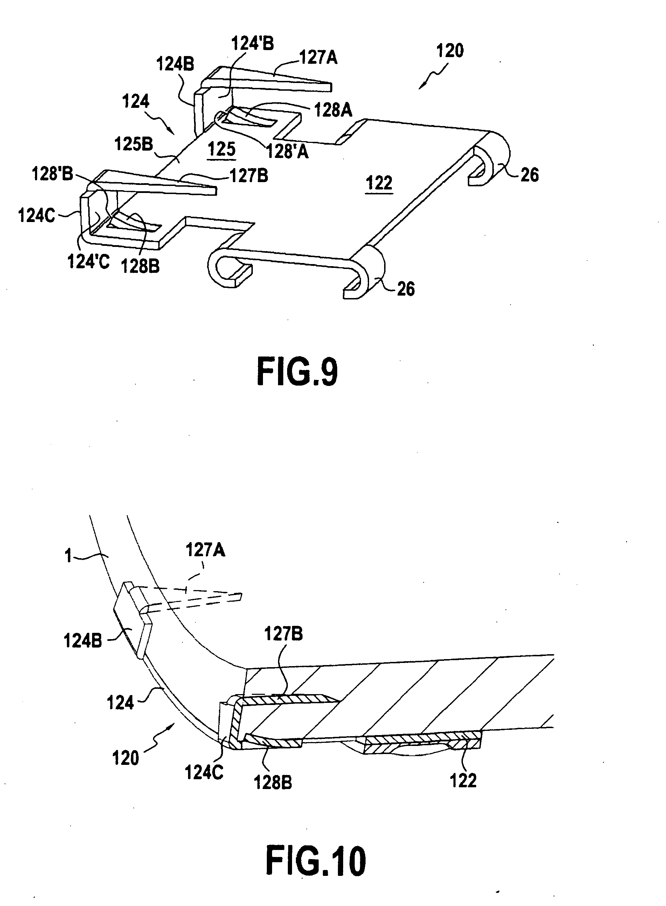

En référence aux figures 8 à 10, on décrit maintenant le deuxième mode de réalisation. Le collier 10 est identique à celui des figures précédentes. Les pièces de positionnement 120 et 140 sont analogues entre elles et légèrement différentes de celles qui viennent d'être décrites. En référence à la pièce de positionnement 120, on voit que les différences par rapport au mode de réalisation des figures précédentes se rapportent à la portion de positionnement 124, tandis que la plaquette de solidarisation 122 est inchangée. On remarque en particulier, qu'elle comporte les mêmes becs de retenue 26 que la plaquette de solidarisation 22 des figures précédentes.

Comme dans le premier mode de réalisation, la portion de positionnement 124 comprend une portion de feuille 125 qui est solidaire de la plaquette de solidarisation 122. Ces deux éléments sont formés dans la continuité l'un de l'autre, et la pièce de positionnement est formée dans une seule pièce à partir d'un feuillard, par pliage et découpe. Comme dans le mode de réalisation précédent, la portion de positionnement 124 comprend des ergots de retenue, respectivement 124B et 124C qui sont repliés du côté de la face intérieure 125B de la portion de feuille de telle sorte que leurs faces internes respectives 124'B et 124'C forment des surfaces de butées axiales.

La portion de positionnement présente également des pointes d'accrochage, respectivement 127A et 127B. Toutefois, à la différence du premier mode de réalisation, ces pointes d'accrochage sont formées sur les bords libres, repliés sous la portion de feuille 125, des ergots de retenue. De manière générale, selon le deuxième mode de réalisation, la portion de feuille présente au moins un ergot de retenue qui présente un bord formant pointe d'accrochage. Ainsi, les pointes d'accrochage s'étendent parallèlement à l'axe A, c'est-à-dire parallèlement à la portion de feuille.

Le dispositif selon ce deuxième mode de réalisation de l'invention peut être mis en place à l'extrémité 1' d'un tuyau 1 en étant déplacé axialement par rapport à ce tuyau de telle sorte que les pointes d'accrochage 127A et 127B pénètrent axialement dans le matériau du tuyau et viennent se harponner dans ce dernier.

On relève que la portion de feuille 125 présente deux lamelles, respectivement 128A et 128B, qui sont en saillie sous sa face interne 125B. En fait, il est avantageux qu'au moins une lamelle de ce type soit présente. En l'espèce, ces lamelles sont prélevées dans la portion de feuille, puisqu'elles sont découpées dans cette portion et relevées sous cette dernière. Elles sont relevées de telle sorte que leurs bords libres respectifs, respectivement 128'A et 128'B soient dirigés vers les surfaces de butée axiale 124'B et 124'C précitées. Ces lamelles permettent de maintenir le matériau du tuyau à une légère distance de la face interne de la portion de feuille, pour s'assurer que les pointes d'accrochage 127A et 127B pénètrent bien dans le bord libre de ce tuyau. Du fait de l'orientation de leurs bords libres, les lamelles empêchent un déplacement de la pièce de positionnement par rapport au tuyau dans le sens opposé au sens F de la figure 5. Ces lamelles peuvent être élastiquement déformables, pour fonctionner comme des ressorts, en s'effaçant dans l'épaisseur de la portion de feuille lors du serrage.

## Revendications

1. Dispositif de serrage comprenant un collier de serrage (10) ayant une ceinture (12) qui a deux faces (12A, 12B) sensiblement cylindriques et qui est apte à être serrée autour d'un objet à serrer (1), et au moins une pièce de positionnement (20, 40 ; 120, 140) comprenant une plaquette de solidarisation (22, 42 ; 122) qui est disposée en regard d'une première face (12A) de la ceinture (12) en étant retenue par rapport à ladite ceinture et une portion de positionnement (24, 44 ; 144) qui est apte à coopérer avec l'objet à serrer pour positionner le dispositif par rapport audit objet,
**caractérisé en ce que**, à l'état initial non serré du collier (10), la plaquette de solidarisation (22, 42 ; 122) est arc-boutée contre la première face (12A) de la ceinture (12), **en ce que** ladite plaquette est apte à être déformée lors du serrage du collier sur l'objet pour présenter une courbure adaptée à celle de la ceinture et **en ce que**, au début du serrage, la déformation de la plaquette provoque une suppression de l'effet d'arc-boutement autorisant un déplacement relatif de la ceinture et de la plaquette.

2. Dispositif selon la revendication 1, **caractérisé en ce que**, à l'état initial non serré du collier, une face (22A) de la plaquette de solidarisation (22, 42 ; 122) tournée vers la première face (12A) de la ceinture (12) présente au moins deux zones d'arc-boutement (23A, 23B) en contact avec ladite première face de la ceinture et une zone de séparation (23C), qui est disposée entre les deux zones d'arc-boutement et qui est à distance (D) de ladite première face de la ceinture.

3. Dispositif selon la revendication 1 ou 2, **caractérisé en ce que** la première face (12A) de la ceinture (12) est la face interne de cette dernière et **en ce que**, à l'état non serré du collier, la plaquette de solidarisation (22, 42 ; 122) présente au moins une portion de corde qui est disposée sensiblement selon une corde d'un arc défini par la portion de la face interne (12A) de la ceinture (12) située en regard de ladite portion de corde.

4. Dispositif selon l'une quelconque des revendications 1 à 3, **caractérisé en ce que** la première face (12A) de la ceinture (12) est la face interne de cette dernière et **en ce que** la plaquette de solidarisation (40') présente une concavité, tournée dans le même sens que la concavité de ladite portion de la face interne (12A) de la ceinture (12), la courbure générale de la plaquette de solidarisation étant inférieure à la courbure de ladite portion de la face interne de la ceinture.

5. Dispositif selon l'une quelconque des revendications 1 à 4, **caractérisé en ce que** la retenue de la plaquette de positionnement (22) par rapport à la ceinture (12) du collier est assurée par des organes de retenue qui comprennent des becs de retenue (26) recourbés sur les bords (13A, 13B) de la ceinture sans être serrés sur ces bords, de manière à permettre un déplacement relatif de ces becs et de la ceinture.

6. Dispositif selon l'une quelconque des revendications 1 à 5, **caractérisé en ce que** la portion de positionnement (24 ; 124) de la pièce de positionnement (20, 40 ; 120, 140) est en saillie axiale par rapport à un bord (13A) de la ceinture (12).

7. Dispositif selon la revendication 6, **caractérisé en ce que** la portion de positionnement (24 ; 124) présente au moins une surface de butée axiale (24'B, 24'C ; 124'B, 124'C) qui est orientée sensiblement perpendiculairement par rapport à l'axe (A) de la ceinture (12).

8. Dispositif selon l'une quelconque des revendications 1 à 7, **caractérisé en ce que** la portion de positionnement (24 ; 124) présente au moins un crochet (27A, 27B ; 127A, 127B).

9. Dispositif selon l'une quelconque des revendications 1 à 7, **caractérisé en ce que** la portion de positionnement (24, 124) comprend une portion de feuille (25, 125) solidaire de la plaquette de solidarisation (22, 42 ; 122), cette portion de feuille étant sensiblement parallèle à l'axe (A) de la ceinture (12) et ayant un bord (24A) éloigné de ladite plaquette qui présente au moins un ergot de retenue (24B, 24C ; 124B, 124C) replié du côté de la face interne (25B ; 125B) de ladite portion de feuille (25, 125).

10. Dispositif selon la revendication 9, **caractérisé en ce que** ledit au moins un ergot de retenue (124B, 124C) présente un bord formant pointe d'accrochage (127A, 127B), ce bord libre étant replié sous ladite portion de feuille (125).

11. Dispositif selon la revendication 9 ou 10, **caractérisé en ce que** la portion de feuille (125) présente au moins une lamelle (128A, 128B) en saillie sous sa face interne (125B), cette lamelle étant de préférence découpée dans la portion de feuille et relevée sous cette dernière.

12. Dispositif selon l'une quelconque des revendications 9 à 11, **caractérisé en ce que** la portion de positionnement (24 ; 124) présente au moins une pointe d'accrochage (27A, 27B) en saillie sous la face inférieure (25B) de la portion de feuille (25), cette pointe d'accrochage étant de préférence découpée dans la portion de feuille (25) et pliée par rapport à cette dernière.

13. Dispositif selon l'une quelconque des revendications 1 à 12, **caractérisé en ce que** la plaquette de solidarisation (22, 42 ; 122) est bloquée au voisinage de l'une de ses extrémités par rapport à la ceinture (12).

14. Dispositif selon l'une quelconque des revendications 1 à 13, **caractérisé en ce qu'**il comprend une pièce de positionnement (40, 140) supplémentaire.

15. Dispositif selon l'une quelconque des revendications 1 à 14, **caractérisé en ce que** le collier (10) comporte un mécanisme de serrage comprenant une vis tangente (14) disposée dans un palier (13) monté à une première extrémité (12') de la ceinture (12), et **en ce que** la deuxième extrémité (12") de la ceinture est insérée dans le palier, entre la vis (14) et la face externe de ladite première extrémité (12') et présente des reliefs de serrage (15) avec lesquels les filets de la vis sont aptes à coopérer lors de la rotation de ladite vis, pour déplacer la deuxième extrémité de la ceinture par rapport à la première.

16. Ensemble d'un dispositif de serrage selon l'une quelconque des revendications 1 à 15 et d'un tuyau (1) formant l'objet à serrer à l'aide dudit dispositif, ce dernier étant monté à une extrémité du tuyau.

17. Ensemble selon la revendication 16, dans lequel le dispositif est défini selon la revendication 9 ou 12 et dans lequel le tuyau (1) est réalisé dans un matériau de type élastomère, **caractérisé en ce que** la pointe d'accrochage (27A, 27B ; 127A, 127B) est harponnée dans le tuyau.

## Claims

1. A clamping device comprising: a clamping collar (10) having a belt (12) that has two substantially cylindrical faces (12A, 12B) and that is suitable for being tightened around an article to be clamped (1); and at least one positioning piece (20, 40; 120, 140) comprising: a securing plate (22, 42; 122) that is disposed facing a first face (12A) of the belt (12) while being retained relative to said belt; and a positioning portion (24, 44; 144) that is suitable for co-operating with the article to be clamped so as to position the device relative to said article;
said clamping device being **characterized in that**, when the collar (10) is in its initial, non-tightened state, the securing plate (22, 42; 122) is braced against the first face (12A) of the belt (12), **in that** said plate is suitable for being deformed while the collar is being tightened onto the article so as to present curvature that matches the curvature of the belt, and **in that**, at the beginning of tightening, the plate deforming causes the bracing effect to cease, thereby allowing the belt and the plate to move relative to each other.

2. A device according to claim 1, **characterized in that**, when the collar is in the initial, non-tightened state, a face (22A) of the securing plate (22, 42; 122) that faces towards the first face (12A) of the belt (12) has at least two bracing zones (23A, 23B) in contact with said first face of the belt and a separation zone (23C) that is disposed between the two bracing zones and that is some distance (D) away from said first face of the belt.

3. A device according to claim 1 or 2, **characterized in that** the first face (12A) of the belt (12) is the inside face of said belt, and **in that**, when the collar is in the non-tightened state, the securing plate (22, 42; 122) has at least one chord portion that is disposed substantially on a chord of an arc defined by the portion of the inside face (12A) of the belt (12) that is situated facing said chord portion.

4. A device according to any one of claims 1 to 3, **characterized in that** the first face (12A) of the belt (12) is the inside face thereof, and **in that** the securing plate (40') presents concavity facing in the same direction as the direction in which the concavity of said portion of the inside face (12A) of the belt (12) faces, the general curvature of the securing plate being less than the curvature of said portion of the inside face of the belt.

5. A device according to any one of claims 1 to 4, **characterized in that** the positioning plate (22) is retained relative to the belt (12) of the collar by retaining members that comprise retaining tabs (26) curved back over the edges (13A, 13B) of the belt without being clamped onto said edges, so as to enable the tabs to move relative to the belt.

6. A device according to any one of claims 1 to 5, **characterized in that** the positioning portion (24; 124) of the positioning piece (20, 40; 120, 140) projects axially relative to one edge (13A) of the belt (12).

7. A device according to claim 6, **characterized in that** the positioning portion (24; 124) presents at least one axial abutment surface (24'B, 24'C; 124'B, 124'C) that extends substantially perpendicularly relative to the axis (A) of the belt (12).

8. A device according to any one of claims 1 to 7, **characterized in that** the positioning portion (24; 124) presents at least one hook (27A, 27B; 127A, 127B).

9. A device according to any one of claims 1 to 7, **characterized in that** the positioning portion (24, 124) comprises a sheet portion (25, 125) integral with the securing plate (22, 42; 122), said sheet portion being substantially parallel to the axis (A) of the belt (12) and having an edge (24A) that is remote from said plate and that is provided with at least one retaining lug (24B, 24C; 124B, 124C) folded back towards the same side as the side on which the inside face (25B; 125B) of said sheet portion (25, 125) is situated.

10. A device according to claim 9, **characterized in that** said at least one retaining lug (124B, 124C) has an edge forming a fastening spike (127A, 127B), this free end being folded back under said sheet portion (125).

11. A device according to claim 9 or claim 10, **characterized in that** the sheet portion (125) presents at least one blade (128A, 128B) projecting under its inside face (125B), said blade preferably being cut out from the sheet portion and lifted away thereunder.

12. A device according to any one of claims 9 to 11, **characterized in that** the positioning portion (24; 124) has at least one fastening spike (27A, 27B) projecting under the inside face (25B) of the sheet portion (25), said fastening spike preferably being cut out from the sheet portion (25) and folded back relative thereto.

13. A device according to any one of claims 1 to 12, **characterized in that** the securing plate (22, 42; 122) is locked in the vicinity of one its ends relative to the belt (12).

14. A device according to any one of claims 1 to 13, **characterized in that** it comprises an additional positioning piece (40, 140).

15. A device according to any one of claims 1 to 14, **characterized in that** the collar (10) is provided with a tightening mechanism comprising a tangential screw (14) disposed in a bearing (13) mounted at a first end (12') of the belt (12), and **in that** the second end (12") of the belt is inserted into the bearing, between the screw (14) and the outside face of said first end (12'), and presents tightening pieces in relief (15) with which the thread of the screw is suitable for co-operating while said screw is turning, so as to move the second end of the belt relative to the first end thereof.

16. An assembly comprising a clamping device according to any one of claims 1 to 15, and a pipe (1) forming the article to be clamped by means of said device, which device is mounted on one end of the pipe.

17. An assembly according to claim 16, in which the device is defined according to claim 9 or claim 12, and in which the pipe (1) is made of a material of the elastomer type, said assembly being **characterized in that** the fastening spike (27A, 27B; 127A, 127B) is hooked barb-like into the pipe.

## Patentansprüche

1. Klemmvorrichtung umfassend eine Klemmschelle (10), die einen Ring (12) aufweist, der zwei im wesentlichen zylindrische Flächen (12A, 12B) hat und der geeignet ist, um einen festzuklemmenden Gegenstand (1) herum festgezogen zu werden, sowie wenigstens ein Positionierungsteil (20, 40; 120, 140), das eine Platte zum festen Verbinden (22, 42; 122), die gegenüber einer ersten Fläche (12A) des Rings (12) angeordnet und dabei in bezug auf den Ring festgehalten ist, und einen Positionierungsabschnitt (24, 44; 144) umfaßt, der geeignet ist, mit dem festzuklemmenden Gegenstand zusammenzuwirken, um die Vorrichtung gegenüber dem Gegenstand zu positionieren,
**dadurch gekennzeichnet, daß** im nicht festgezogenen Ausgangszustand der Schelle (10) die Platte zum festen Verbinden (22, 42; 122) an der ersten Fläche (12A) des Rings (12) abgestützt ist, daß die Platte geeignet ist, während des Festziehens der Schelle an dem Gegenstand verformt zu werden, um eine an die Krümmung des Rings angepaßte Krümmung aufzuweisen, und daß zu Beginn des Festziehens die Verformung der Platte ein Aufheben der Abstützwirkung bewirkt, wodurch eine Relativbewegung des Rings und der Platte zugelassen wird.

2. Vorrichtung nach Anspruch 1, **dadurch gekennzeichnet, daß** im nicht festgezogenen Ausgangszustand der Schelle eine der ersten Fläche (12A) des Rings (12) zugewandte Seite (22A) der Platte zum festen Verbinden (22, 42; 122) wenigstens zwei Abstützbereiche (23A, 23B), die mit der ersten Fläche des Rings in Kontakt sind, sowie einen Trennbereich (23C) aufweist, der zwischen den beiden Abstützbereichen angeordnet ist und der sich in einem Abstand (D) von der ersten Fläche des Rings befindet.

3. Vorrichtung nach Anspruch 1 oder 2, **dadurch gekennzeichnet, daß** die erste Fläche (12A) des Rings (12) dessen Innenseite ist und daß im nicht festgezogenen Zustand der Schelle die Platte zum festen Verbinden (22, 42; 122) wenigstens einen Sehnenabschnitt aufweist, der im wesentlichen entlang einer Sehne eines Bogens angeordnet ist, welcher durch den dem Sehnenabschnitt gegenüberliegenden Abschnitt der Innenseite (12A) des Rings (12) definiert ist.

4. Vorrichtung nach einem der Ansprüche 1 bis 3, **dadurch gekennzeichnet, daß** die erste Fläche (12A) des Rings (12) dessen Innenseite ist und daß die Platte zum festen Verbinden (40') eine Konkavität aufweist, die in die gleiche Richtung wie die Konkavität des Abschnitts der Innenseite (12A) des Rings (12) weist, wobei die Gesamtkrümmung der Platte zum festen Verbinden geringer ist als die Krümmung des Abschnitts der Innenseite des Rings.

5. Vorrichtung nach einem der Ansprüche 1 bis 4, **dadurch gekennzeichnet, daß** der Halt der Positionierungsplatte (22) gegenüber dem Ring (12) der Schelle durch Halteorgane sichergestellt ist, die Haltenasen (26) umfassen, welche um die Ränder (13A, 13B) des Rings gebogen sind, ohne an diesen Rändern festgeklemmt zu sein, so daß eine Relativbewegung dieser Nasen und des Rings ermöglicht wird.

6. Vorrichtung nach einem der Ansprüche 1 bis 5, **dadurch gekennzeichnet, daß** der Positionierungsabschnitt (24; 124) des Positionierungsteils (20, 40; 120, 140) gegenüber einem Rand (13A) des Rings (12) axial vorspringt.

7. Vorrichtung nach Anspruch 6, **dadurch gekennzeichnet, daß** der Positionierungsabschnitt (24; 124) wenigstens eine axiale Anschlagfläche (24'B, 24'C; 124'B, 124'C) aufweist, die im wesentlichen senkrecht zur Achse (A) des Rings (12) ausgerichtet ist.

8. Vorrichtung nach einem der Ansprüche 1 bis 7, **dadurch gekennzeichnet, daß** der Positionierungsabschnitt (24; 124) wenigstens einen Haken (27A, 27B; 127A, 127B) aufweist.

9. Vorrichtung nach einem der Ansprüche 1 bis 7, **dadurch gekennzeichnet, daß** der Positionierungsabschnitt (24, 124) einen Folienabschnitt (25, 125) umfaßt, der mit der Platte zum festen Verbinden (22, 42; 122) fest verbunden ist, wobei dieser Folienabschnitt zur Achse (A) des Rings (12) im wesentlichen parallel verläuft und eine von der Platte entfernte Kante (24A) hat, die wenigstens einen Haltevorsprung (24B, 24C; 124B, 124C) aufweist, der auf der Seite der Innenfläche (25B; 125B) des Folienabschnittes (25, 125) umgebogen ist.

10. Vorrichtung nach Anspruch 9, **dadurch gekennzeichnet, daß** der wenigstens eine Haltevorsprung (124B, 124C) einen eine Einhakspitze (127A, 127B) bildenden Rand aufweist, wobei dieser freie Rand unter den Folienabschnitt (125) gebogen ist.

11. Vorrichtung nach Anspruch 9 oder 10, **dadurch gekennzeichnet, daß** der Folienabschnitt (125) wenigstens eine unter seiner Innenfläche (125B) vorspringende Lamelle (128A, 128B) aufweist, wobei diese Lamelle vorzugsweise aus dem Folienabschnitt ausgeschnitten und unter diesem hochgeklappt ist.

12. Vorrichtung nach einem der Ansprüche 9 bis 11, **dadurch gekennzeichnet, daß** der Positionierungsabschnitt (24; 124) wenigstens eine unter der Unterseite (25B) des Folienabschnitts (25) vorspringende Einhakspitze (27A, 27B) aufweist, wobei diese Einhakspitze vorzugsweise aus dem Folienabschnitt (25) ausgeschnitten und gegenüber diesem umgebogen ist.

13. Vorrichtung nach einem der Ansprüche 1 bis 12, **dadurch gekennzeichnet, daß** die Platte zum festen Verbinden (22, 42; 122) in der Nähe von einem ihrer Enden gegenüber dem Ring (12) festgelegt ist.

14. Vorrichtung nach einem der Ansprüche 1 bis 13, **dadurch gekennzeichnet, daß** sie ein zusätzliches Positionierungsteil (40, 140) umfaßt.

15. Vorrichtung nach einem der Ansprüche 1 bis 14, **dadurch gekennzeichnet, daß** die Schelle (10) einen Klemmmechanismus aufweist, der einen Schneckenantrieb (14) umfaßt, der in einem an einem ersten Ende (12') des Rings (12) angebrachten Lager (13) angeordnet ist, und daß das zweite Ende (12") des Rings zwischen der Schnecke (14) und der Außenseite des ersten Endes (12') in das Lager eingesteckt ist und Klemmreliefs (15) aufweist, mit denen das Gewinde der Schnecke während des Drehens der Schnecke zusammenwirken kann, um das zweite Ende des Rings gegenüber dem ersten zu bewegen.

16. Anordnung aus einer Klemmvorrichtung nach einem der Ansprüche 1 bis 15 und einem Rohr (1), das den mit Hilfe der Vorrichtung festzuklemmenden Gegenstand bildet, wobei letztere an einem Ende des Rohrs angebracht ist.

17. Anordnung nach Anspruch 16, wobei die Vorrichtung gemäß Anspruch 9 oder 12 definiert ist und das Rohr (1) aus einem elastomerartigen Material hergestellt ist, **dadurch gekennzeichnet, daß** die Einhakspitze (27A, 27B; 127A, 127B) in das Rohr harpunenartig eingesteckt ist.
